# EUROPÄISCHE PATENTSCHRIFT

(11) **EP 4 427 577 B1**
(45) Veröffentlichungstag und Bekanntmachung des Hinweises auf die Patenterteilung: **22.07.2026**
(21) Anmeldenummer: 24161747.1
(22) Anmeldetag: 06.03.2024
(51) Int. Cl.: A01D 78/10

(54) **LANDWIRTSCHAFTLICHER KREISELSCHWADER**
AGRICULTURAL ROTARY SWATHER
ANDAINEUSE ROTATIVE AGRICOLE

(30) Priorität: 09.03.2023 DE 102023105908
(43) Veröffentlichungstag der Anmeldung: 11.09.2024
(73) Patentinhaber: Pöttinger Landtechnik GmbH, 4710 Grieskirchen (AT)
(72) Erfinder: Reininger, Markus, 4710 Grieskirchen (AT)
(74) Vertreter: Lorenz Seidler Gossel Part. mbB

(56) Entgegenhaltungen:
- EP-A1- 3 520 600
- DE-A1- 102014 018 133

## Beschreibung

Die vorliegende Erfindung betrifft einen Kreiselschwader zum Anbau an einen Schlepper, mit mehreren Rechkreiseln zum Zusammenrechen von Erntegut zu einem Schwad, von denen zumindest zwei hintereinander mit einer Spurüberlappung angeordnet sind, wobei zumindest einer der genannten zwei Rechkreisel durch eine Einstellvorrichtung zum Einstellen der Spurüberlappung quer verstellbar ist, sowie ferner ein Verfahren zum Betreiben eines solchen Kreiselschwaders.

Solche Kreiselschwader mit mehreren Rechkreiseln besitzen üblicherweise einen Maschinenrahmen, der durch ein Fahrwerk am Boden abgestützt ist und über eine geeignete Anbauvorrichtung, wie beispielsweise eine Deichsel, an einen Schlepper anbaubar ist, wobei der Maschinenrahmen eine längliche, sich näherungsweise in Fahrtrichtung erstreckende Struktur besitzen kann, sodass mehrere Rechkreisel hintereinander gestaffelt angeordnet und am Maschinenrahmen aufgehängt sein können. Beispielsweise können die Rechkreisel an Tragarmen gelagert sein, die vom zentralen Maschinenrahmen quer auskragen und ggf. daran schwenkbar gelagert sein können, sodass die Rechkreisel aus einer abgesenkten Arbeitsstellung in eine ausgehobene Transport- und/oder Vorgewendestellung nach oben geschwenkt werden können. **In** der abgesenkten Arbeitsstellung laufen die Rechkreisel um eine aufrechte Kreiseldrehachse um, wobei die Rechkreisel durch Tastfahrwerke am Boden abgestützt sein können, während die Rechkreisel in der ausgehobenen Transportstellung etwa aufrechtstehend angeordnet sein können, sodass sich die Kreiseldrehachse liegend erstreckt, vgl. bspw. EP 20 57 889 B1. Dabei schlägt die DE 10 2014 018 133 A1 vor, das Ausheben der Rechkreisel in die Vorgewende- und Transportstellung zu unterbinden, wenn mit einem Neigungssensor festgestellt wird, dass der Schwader in Hanglagen eine zu stark geneigte, kippgefährdete Stellung einnimmt.

Dabei werden bei Kreiselschwadern mit größerer Arbeitsbreite die einzelnen Rechkreisel oft paarweise angeordnet, wobei ein in Fahrtrichtung hinteres Rechkreiselpaar einen vergleichsweise kleineren Abstand voneinander hat als ein in Fahrtrichtung weiter vorne angeordnetes Rechkreiselpaar, sodass die vorderen Rechkreisel in der abgesenkten Arbeitsstellung weiter außen positioniert sind und das Erntegut nach innen zusammenrechen können, sodass das von den vorderen Rechkreiseln abgelegte Erntegut von den hinteren Rechkreiseln übernommen und nochmals weiter nach innen zusammengerecht werden kann, um dort in einem Schwad abgelegt zu werden, vgl. bspw. DE 10 2007 051 187 A1 oder EP 13 64 573 B1. Je nach Ausbildung bzw. gewünschter Schwadbildung kommen aber auch andere Kreiselanordnungen in Betracht, beispielsweise um das zusammengerechte Erntegut nicht in einem zentralen, einzelnen Mittelschwad abzulegen, sondern in zwei parallelen Teilschwaden.

Ungeachtet der konkreten Schwadablage laufen zumindest zwei hintereinander angeordnete Rechkreisel mit einer gewissen Spurüberlappung, um das vom vorderen Rechkreisel zusammengerechte Erntegut verlässlich durch den nachlaufenden Rechkreisel aufnehmen und weiter versetzen bzw. zusammenrechen zu können. Die Spurüberlappung meint dabei einen streifenförmigen Arbeitsbereichsabschnitt entlang des Fahrwegs, der sowohl von dem vorauslaufenden Rechkreisel als auch vom nachlaufenden Rechkreisel überstrichen wird und üblicherweise einen Bruchteil der Arbeitsbreite eines jeden Rechkreisels beträgt, beispielsweise 5% bis 10% oder 5% bis 15% oder 5% bis 25% der Arbeitsbreite eines jeweiligen Rechkreisels.

Die Spurüberlappung soll dabei möglichst klein gehalten sein, um eine insgesamt große Arbeitsbreite zu erzielen und die Einzel-Arbeitsbreiten der einzelnen Rechkreisel möglichst auszunutzen. Andererseits muss die Spurüberlappung ausreichend groß sein, um zu vermeiden, dass Erntegut zwischen den Rechkreiseln am Boden liegen bleibt und vom nachlaufenden Rechkreisel nicht erfasst wird. Diese erforderliche, minimale Spurüberlappung variiert dabei je nach Fahrsituation bzw. den Betriebsumständen. Beispielsweise kann es zu Problemen kommen, wenn der Kreiselschwader bzw. das Schlepper-Kreiselschwader-Gespann eine Kurve fährt und dabei der hintere Rechkreisel aufgrund der Nachlaufeigenschaften des gesamten Schwaders die Kurve sozusagen stärker schneidet als der vorauslaufende, näher am Schlepper befindliche Rechkreisel, sodass eine bei Geradeausfahrt ausreichende Spurüberlappung zu klein wird bzw. gänzlich eliminiert wird, wodurch ein unbearbeiteter Streifen entsteht.

Eine ähnliche Problematik ergibt sich auch bei Hangfahrten des Kreiselschwaders, genauer gesagt Querfahrten am Hang entlang von Schichtlinien bzw. Fahrten auf quer abschüssigen Ebenen oder Bodenkonturen, auf denen der Kreiselschwader hangabwärts abdriften kann, sodass der Kreiselschwader nicht mehr exakt geradeaus fährt, sondern leicht bzw. mehr oder minder schräg zur Fahrtrichtung entlanggezogen wird und die Spurüberlappung ebenfalls nicht mehr stimmt.

Um bei solchen speziellen Fahrsituationen eine ausreichende Spurüberlappung sicherzustellen, wurde bereits vorgeschlagen, zumindest einen der hintereinander laufenden Rechkreisel querverstellbar auszubilden, sodass der Spurversatz gegenüber dem nachlaufenden bzw. vorlaufenden Rechkreisel justiert werden kann. Beispielsweise kann eine solche Querverstellbarkeit durch Ein- und Austeleskopieren der zuvor genannten Tragarme realisiert werden, die vom länglichen Maschinenrahmen quer auskragen und den jeweiligen Rechkreisel führen. Alternativ kann auch der Rechkreisel am Tragarm längsverschieblich geführt und/oder der Tragarm am länglichen Maschinenrahmen querverschieblich geführt und durch einen entsprechenden Aktor wie beispielsweise einen Druckmittelzylinder oder eine Antriebsspindel verstellbar sein.

Durch eine solche Einstellvorrichtung zum Einstellen der Spurüberlappung kann zumindest einer der Rechkreisel in seinem Abstand vom länglichen, zentralen Maschinenrahmen verstellt bzw. weiter nach außen oder weiter nach innen gefahren werden.

Beispielsweise zeigt die Schrift EP 13 64 573 B1 einen Kreiselschwader, dessen Fahrwerk bei Kurvenfahrten des Schleppers miteingelenkt bzw. gegengelenkt wird, um die Spurüberlappung der versetzt hintereinander laufenden Rechkreisel auch bei Kurvenfahrten aufrechterhalten zu können, wobei zusätzlich auch noch die vorderen Rechkreisel über längenverstellbare Tragarme weiter nach innen bzw. nach außen gefahren werden können.

Die Schrift EP 35 20 600 B1 schlägt ferner vor, die Rechkreisel eines Kreiselschwaders bei Hangfahrten zu verstellen, um eine ausreichende Spurüberlappung sicherzustellen. Dabei wird zum einen der Lenkwinkel des Schleppers und zum anderen der Einschlagwinkel der Schwaderdeichsel gegenüber dem Schlepper ermittelt, um aus den beiden Sensorsignalen Schlepper-Lenkwinkel und Deichsel-Einlenkwinkel bestimmen zu können, wie stark der Kreiselschwader letztlich am Hang abdriftet. Anhand der beiden sensorisch erfassten Größen Schlepper - Lenkwinkel und Deichsel - Einschlagwinkel wird die Spurüberlappung der hangaufwärts positionierten Rechkreisel erhöht und die Spurüberlappung der hangabwärts arbeitenden Rechkreisel erniedrigt, um einerseits unbearbeitete Streifen zu vermeiden und andererseits eine große Arbeitsbreite aufrechtzuerhalten. Die sensorische Erfassung der beiden Parameter ist jedoch relativ aufwendig und erfordert eine hohe Rechnerkapazität, da Lenkwinkel und Deichseleinschlag durch das Abdriften voneinander unabhängig variieren können und sich ständig ändern, sodass eine echtzeitnahe Verarbeitung erforderlich ist, um zeitnah reagieren zu können.

Der vorliegenden Erfindung liegt hiervon ausgehend die Aufgabe zugrunde, einen verbesserten Kreiselschwader und ein verbessertes Verfahren zu dessen Betrieb zu schaffen, die Nachteile des Standes der Technik vermeiden und letzteren in vorteilhafter Weise weiterbilden. Insbesondere soll bei schrägen Hangfahrten mit einfachen Mitteln eine streifenfreie Feldbearbeitung unter Ausnutzung der Arbeitsbreite des Kreiselschwaders erreicht werden.

Erfindungsgemäß wird die genannte Aufgabe durch einen Kreiselschwader gemäß Anspruch 1 sowie ein Verfahren gemäß Anspruch 12 gelöst. Bevorzugte Ausgestaltungen der Erfindung sind Gegenstand der abhängigen Ansprüche.

Es wird also vorgeschlagen, die Querneigung des Kreiselschwaders durch einen Neigungssensor zu erfassen und die Querverstellung der hintereinander laufenden Rechkreisel in Abhängigkeit der Querneigung nachzujustieren. Erfindungsgemäß ist die Einstellvorrichtung zum Einstellen der Spurüberlappung der zumindest zwei hintereinander angeordneten Rechkreisel dazu ausgebildet, auf ein Sensorsignal eines Neigungssensors zu reagieren und in Abhängigkeit des Sensorsignals des Neigungssensors, das die Querneigung des Kreiselschwaders und/oder des Schleppers angibt, die Spurüberlappung zu vergrößern und/oder zu verkleinern.

Die sensorisch erfasste Hangneigung bzw. die tatsächliche Querneigung des Kreiselschwaders oder des ihn ziehenden Schleppers charakterisiert in ausreichendem Maße die Neigung des Kreiselschwaders, bei schrägen Hangfahrten hangabwärts abzudriften, so dass die genannte Einstellvorrichtung in Abhängigkeit des Neigungssignals einen oder mehrere Rechkreisel gegenüber dem Maschinenrahmen weiter nach außen oder weiter nach innen fahren kann, um die Spurüberlappung der zumindest zwei zusammenarbeitenden, hintereinander laufenden Rechkreisel zu vergrößern oder zu verkleinern.

Die Einstellvorrichtung braucht dabei nicht gleichzeitig ein Lenkwinkelsignal des Schleppers und ein Deichseleinschlags-Signal verarbeiten und auswerten, um die Spurüberlappung angemessen einstellen zu können, und braucht auch nicht die entsprechenden Sensoren für die Erfassung des Lenkwinkels und des Deichseleinschlags, wodurch sich insgesamt das zu verarbeitende Datenvolumen verkleinert, der Sensorikaufwand ermäßigt und die Reaktionszeit der Einstellvorrichtung entsprechend schneller wird.

Der Neigungssensor ist dabei am Kreiselschwader selbst, beispielsweise an dessen zentralem Maschinenrahmen, angebracht, um direkt die Querneigung des Kreiselschwaders zu messen, wobei der Sensor einen Neigungswinkel gegenüber der Horizontalen in einer Ebene senkrecht zur Längsrichtung des Kreiselschwaders oder senkrecht zur Fahrtrichtung messen kann, d.h. den Neigungswinkel, der angibt, wie weit ein linker Maschinenteil im Vergleich zu einem rechten Maschinenteil nach unten bzw. nach oben verkippt ist bzw. abgesenkt oder angehoben ist.

Zusätzlich kann ein weiterer Neigungssensor auch die Neigung des Schleppers messen, der den Kreiselschwader zieht, so dass in diesem Fall die genannte Einstellvorrichtung das Hangneigungs-Sensorsignal vom Schlepper her bzw. dem am Schlepper angeordneten Neigungssensor her empfängt. Ein solcher am Schlepper angebrachter Neigungssensor kann wiederum die Querneigung des Schleppers in einer Ebene senkrecht zur Fahrtrichtung oder senkrecht zur Längsachse des Schleppers messen.

Zusätzlich kann auch ein Neigungssensor vorgesehen sein, der die tatsächliche Hangneigung misst, beispielsweise durch Konturerkennung eines vor dem Gespann liegenden Fahrwegs und einen Abgleich der Kantenkontur gegenüber einer Horizontalen. Eine solche sozusagen vorausschauende Bestimmung der Hangneigung kann die Reaktionszeit für die Einstellvorrichtung verlängern und ein rechtzeitiges Nachjustieren der Querverstellung der Rechkreisel zueinander und damit eine Verstellung der Spurüberlappung schon vornehmen zu können, wenn ein beispielsweise stärker geneigter Hangabschnitt erreicht wird.

Vorzugsweise ist aber zumindest am Kreiselschwader selbst ein direkt dessen Querneigung messender Sensor vorgesehen, um präzise auf die tatsächlich am Kreiselschwader herrschende Hang-Querneigung reagieren zu können.

Die Einstellvorrichtung kann die seitliche Ausladung der Rechkreisel relativ zueinander und damit die Spurüberlappung kontinuierlich während des Arbeitsbetriebs verändern und einstellen, um feinfühlig und kontinuierlich auf sich ändernde Hangneigungen zu reagieren.

Um ein ständiges Hin- und Herverstellen zu vermeiden, kann die Einstellvorrichtung dabei Schwellwerte berücksichtigen, beispielsweise dergestalt, dass eine einmal eingestellte Spurüberlappung erst dann verändert wird, wenn die Hangneigung bzw. die Querneigung des Kreiselschwaders gegenüber dem Wert, der für die vorherige Einstellung maßgeblich war, eine Änderung erfährt, die größer ist als ein vorbestimmter Schwellwert.

Alternativ oder zusätzlich zu einer kontinuierlichen Verstellung kann auch eine stufenweise Verstellung vorgesehen sein, beispielsweise dergestalt, dass für die Hangneigung bzw. die Querneigung drei Stufen vorgesehen werden, beispielsweise "eben", "leichte Querneigung" und "starke Querneigung", wobei dann die Einstellvorrichtung analysiert, in welchen Bereich die vom Sensor aktuell gemessene Hang- bzw. Querneigung fällt, woraufhin dann die Einstellvorrichtung eine "kleine Überlappung", "mittlere Überlappung" oder "große Überlappung" einstellt und die Rechkreisel eine entsprechende Ausladungsstellung anfahren.

Vorteilhafterweise können aber auch mehr als drei Stufen oder eine kontinuierliche Verstellung in Abhängigkeit des Querneigungswinkels vorgesehen werden, um eine feinere Anpassung an verschiedene Querneigungen zu erzielen.

Die Einstellvorrichtung kann dazu ausgebildet sein, zumindest für zwei auf der hangaufwärtigen Seite arbeitende Rechkreisel die Spurüberlappung zu erhöhen, wenn die Querneigung des Rechkreisels zunimmt bzw. ein vorbestimmtes Maß überschreitet. Insbesondere kann ein in Fahrtrichtung vorderer, weiter außen arbeitender Rechkreisel auf der hangaufwärtigen Seite weiter nach innen verstellt werden, um die Spurüberlappung zum nachlaufenden Rechkreisel zu vergrößern und hierdurch einen unbearbeiteten Streifen aufgrund der Abdrift des Kreiselschwaders zu vermeiden. Dabei kann der genannte vordere Rechkreisel umso weiter nach innen verstellt werden, je stärker die Querneigung wird. Durch das nach innen Verstellen des vorderen Rechkreisels wird die Überlappung zum hinteren Rechkreisel immer größer.

Um auch bei Abdriften des Rechkreisels bei schrägen Hangfahrten die Schlagkraft zu erhalten, kann die Einstellvorrichtung auch dazu ausgebildet sein, die Spurüberlappung der hangabwärts arbeitenden Rechkreisel zu erniedrigen, wenn die Querneigung zunimmt bzw. ein bestimmtes Maß überschreitet. Insbesondere kann ein auf der hangabwärtigen Seite angeordneter, vorderer und weiter außen positionierter Rechkreisel weiter nach außen verstellt werden, wenn die Hangneigung bzw. Querneigung zunimmt bzw. einen entsprechenden Schwellwert überschreitet. Hierdurch wird an sich die Spurüberlappung zum nachlaufenden, hangabwärtigen Rechkreisel kleiner, was jedoch dadurch kompensiert wird, dass der Kreiselschwader durch das leichte Abdriften hangabwärts insgesamt leicht schräg entlang des Fahrwegs gezogen wird. Durch das weiter nach außen Verstellen des unteren, vorderen Rechkreisels kann die insgesamt erzielte Arbeitsbreite des Kreiselschwaders aufrechterhalten werden bzw. diesbezüglich auf nur kleinere Einbußen beschränkt bleiben.

In Weiterbildung der Erfindung kann die Einstellvorrichtung die Spurüberlappung der kaskadenartig hintereinander angeordneten Rechkreisel nur in Abhängigkeit des genannten Querneigungssignals des Hangneigungs- bzw. Querneigungssensors einstellen. Hierdurch wird die benötigte Sensorik besonders einfach und der Datenverarbeitungsaufwand gering.

In alternativer Weiterbildung der Erfindung kann die Einstellvorrichtung für die Einstellung der Spurüberlappung auch noch andere Parameter bzw. Betriebsgrößen oder Umgebungsgrößen berücksichtigen. Insbesondere kann es sinnvoll sein, die Bodenbeschaffenheit zu berücksichtigen und die Spurüberlappung, zusätzlich zur sensorisch erfassten Hangneigung, in Abhängigkeit der jeweiligen Bodenbeschaffenheit unterschiedlich anzupassen. Insbesondere kann die Einstellvorrichtung dazu ausgebildet sein, Oberflächennässe und/oder Bodenfeuchte zu berücksichtigen und beispielsweise bei nassem Boden für die hangaufwärts angeordneten Rechkreisel eine stärkere Überlappung vorzusehen als bei trockenen Böden, und/oder für die hangabwärts positionierten Rechkreisel bei nassen Böden eine kleinere Spurüberlappung vorzusehen als bei trockenen Böden. Eine solche Berücksichtigung der Oberflächennässe oder Bodenfeuchte basiert auf dem Gedanken, dass der Kreiselschwader bei nassem und somit rutschigem Boden zu stärkerer Abdrift neigt bzw. schon bei kleineren Hangneigungen quer abdriften kann, sodass für kleinere Hangneigungen stärkere Verstellungen sinnvoll sein können.

Als Bodenparameter können dabei auch andere Umstände berücksichtigt werden, die ein stärkeres oder schnelleres Abdriften wahrscheinlicher werden lassen, beispielsweise sehr staubige Böden oder ggf. auch die Qualität des zusammenzurechenden Ernteguts, beispielsweise wenn das Fahrwerk des Kreiselschwaders auf rutschigem Stroh oder auf weniger rutschigem Heu fährt.

Die Bodenbeschaffenheit kann mittels eines oder mehrerer Bodenbeschaffenheits-Sensoren sensorisch erfasst und an die Einstellvorrichtung gemeldet werden, woraufhin die Einstellvorrichtung in Abhängigkeit des einen oder der mehreren Bodenbeschaffenheitssignale die Einstellung der Spurüberlappung anpasst.

In Weiterbildung der Erfindung kann es aber auch ausreichend sein, wenn die Einstellvorrichtung eine Eingabeschnittstelle zum manuellen Eingeben und/oder Auswählen der Bodenbeschaffenheit aufweist und der Schlepperführer die Bodenbeschaffenheit manuell eingibt. Beispielsweise kann zu Beginn einer Feldbearbeitung oder bei Erfassen einer bestimmten Hang- bzw. Querneigung der Schlepperführer durch eine Anzeigevorrichtung aufgefordert werden, beispielsweise durch ein Eingabemenü auf einem Bildschirm, die Bodenbeschaffenheit zu qualifizieren. Beispielsweise kann in einem Abfragemenü eine Auswahl verschiedener Bodenbeschaffenheiten bereitgestellt werden, von denen der Schlepperführer dann eine auszuwählen, beispielsweise anzuklicken hat. Beispielsweise kann im Auswahlmenü "trockener Boden", "feuchter Boden" und "stark nasser Boden" angeboten werden.

Je nach Bodenbeschaffenheit passt die Einstellvorrichtung die Zielüberlappung je Querneigungsgrad entsprechend an, beispielsweise dergestalt, dass bei rutschiger Bodenbeschaffenheit, die ein leichteres bzw. stärkeres Abdriften mit sich bringt, mit einer Verstellung der Spurüberlappung bereits bei kleineren Neigungswinkeln begonnen und/oder für einen entsprechenden Neigungswinkel eine stärkere Verstellung vorgesehen wird.

Alternativ oder zusätzlich zur Bodenbeschaffenheit kann die Einstellvorrichtung auch dazu ausgebildet sein, das Einlenken des Kreiselschwaders gegenüber dem Schlepper zu berücksichtigen. Beispielsweise kann mit einem Winkelsensor das Einlenken einer Deichsel des Kreiselschwaders gegenüber dem Schlepper überwacht und der Einstellvorrichtung gemeldet werden, wobei die Einstellvorrichtung in Abhängigkeit des Einlenkwinkels die Spurüberlappung anpassen kann, beispielsweise dergestalt, dass die Zielüberlappung je Neigungsgrad in Abhängigkeit des Einschlagwinkels verstellt wird.

Alternativ oder zusätzlich kann die Einstellvorrichtung auch den Lenkwinkel des Schleppers berücksichtigen, wobei der Einstellvorrichtung der Lenkwinkel beispielsweise über den ISO-Bus des Schleppers bereitgestellt werden kann, auf dem der Lenkwinkel üblicherweise bereitgestellt wird. **In** Abhängigkeit des Lenkwinkels kann die Einstellvorrichtung die Spurüberlappung einstellen, wobei dies bei Hangfahrten zusätzlich zur Berücksichtigung des Neigungswinkels erfolgen kann, beispielsweise dergestalt, dass die Zielüberlappung je Neigungsgrad in Abhängigkeit des Lenkwinkels des Schleppers angepasst bzw. verändert wird.

Die Erfindung wird nachfolgend anhand eines bevorzugten Ausführungsbeispiels und zugehörigen Zeichnungen näher erläutert. **In** den Zeichnungen zeigen:
- Fig. 1:: eine Draufsicht auf einen Kreiselschwader nach einer vorteilhaften Ausführung der Erfindung im Arbeitsbetrieb in der Ebene, wobei die Überlappung eines vorderen mit einem hinteren Rechkreisel für den Betrieb in der Ebene dargestellt ist, und
- Fig. 2:: eine Draufsicht auf den Kreiselschwader aus Fig. 1 im Arbeitsbetrieb bei einer Hang-Querfahrt mit Abdriften des Kreiselschwaders, wobei die in Abhängigkeit der Querneigung veränderte Spurüberlappung dargestellt ist.

Wie die Figuren zeigen, umfasst der Kreiselschwader 1 einen länglichen Maschinenrahmen 2, der sich bei Geradeausfahrt in der Ebene zumindest näherungsweise in Fahrtrichtung erstrecken kann und eine Längsachse des Kreiselschwaders 1 definieren kann.

Der genannte Maschinenrahmen 2 kann durch ein Fahrwerk 3 am Boden abgestützt sein. Durch eine geeignete Anbauvorrichtung 4 ist der Maschinenrahmen 2 an einen nur angedeuteten Schlepper 5 anbaubar, wobei die genannte Anbauvorrichtung 4 eine Deichsel sein kann, die gelenkig am Zugmaul des Schleppers einhängbar sein kann, oder auch einen Anbaubock umfassen kann, der am Schlepper über Lenker anbaubar ist und eine Gelenkachse zum Maschinenrahmen 2 umfassen kann, sodass der Maschinenrahmen 2 gegenüber dem Schlepper 5 einlenken kann.

Der Kreiselschwader 1 umfasst mehrere Rechkreisel 6, die über seitlich quer auskragende Tragarme 7 am Maschinenrahmen 2 angelenkt und geführt sein können. Die Tragarme 7 können am Maschinenrahmen 2 in an sich bekannter Weise um liegende, in Fahrtrichtung weisende Schwenkachsen schwenkbar gelagert und durch Kraftheber aushebbar sein, um die Rechkreisel in eine Transportposition nach oben schwenken zu können und umgekehrt in die in den Figuren dargestellte Arbeitsposition absenken zu können. **In** der Arbeitsposition können die Rechkreisel 6 durch Tastfahrwerke am Boden abgestützt sein.

Die Rechkreisel 6 können in an sich bekannter Weise an Kreiselarmen gelagerte Rechzinken umfassen, die um eine in der Arbeitsposition aufrechte Kreiselachse 8 umlaufen und auf ihrer Umlaufbahn gesteuert sein können, um auf dem Boden liegendes Erntegut zusammenzurechen und in Form eines Schwads abzulegen, wie dies an sich per se bekannt ist.

Wie die Figuren zeigen, können die Rechkreisel 6 paarweise bzw. gruppenweise auf einer rechten Seite und auf einer linken Seite des Maschinenrahmens 2 angeordnet sein, wobei auf einer Seite liegende Rechkreisel 6 kaskadenartig versetzt zueinander angeordnet sind und hintereinander herlaufend miteinander kooperieren. Insbesondere kann ein vorderer Rechkreisel 6v weiter außen, d.h. vom Maschinenrahmen 2 in Querrichtung weiter beabstandet angeordnet sein als ein hinterer Rechkreisel 6h, sodass der vordere Rechkreisel 6v einen weiter außen liegenden Fahrstreckenabschnitt zusammenrecht und der hintere Rechkreisel 6h einen weiter innen liegenden Fahrstreckenabschnitt zusammenrecht. Die Anordnung der Rechkreisel 6 ist dabei derart aufeinander abgestimmt, dass das vom vorderen Rechkreisel 6v zusammengerechte und abgelegte Erntegut in der Fahrbahn bzw. Arbeitsspur des hinteren Rechkreisels 6h zu liegen kommt und von letzterem übernommen und nochmals weiter zusammengerecht wird.

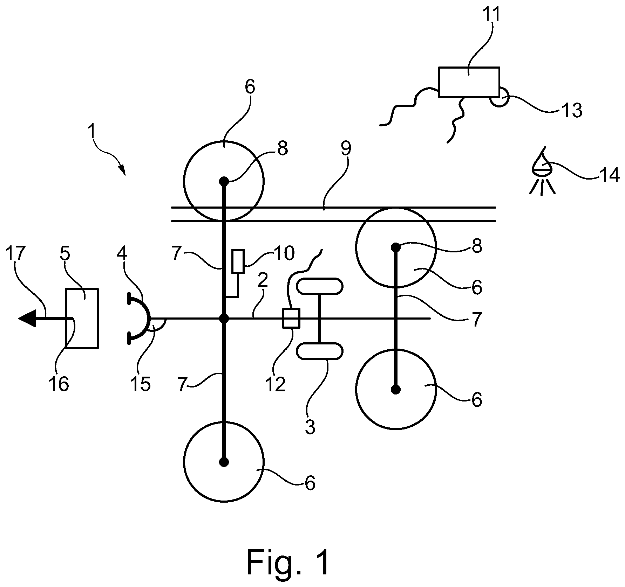

Um sicherzustellen, dass das vom vorderen Rechkreisel 6v zusammengerechte Erntegut vom hinteren, nachlaufenden Rechkreisel 6h erfasst und weiter versetzt wird, haben die vorderen und hinteren Rechkreisel 6h, 6v eine Spurüberlappung 9, vgl. Figur 1. Dies gilt zum einen für die rechtsseitig angeordneten Rechkreisel 6 und zum anderen für die linksseitig angeordneten Rechkreisel 6.

Wie die Figuren zeigen, können die Rechkreisel 6 insgesamt betrachtet eine V-förmige, kaskadenartige Anordnung besitzen, bei der die vorderen Rechkreisel 6v weiter voneinander beabstandet sind als die hinteren Rechkreisel 6h. Bei Schwadkreisein mit beispielsweise sechs Rechkreisel könnte die Anordnung weiterhin so getroffen sein, dass die beiden vordersten Rechkreisel den größten Abstand voneinander, die mittleren Rechkreisel einen mittleren Abstand voneinander und die hinteren Rechkreisel einen kleinsten Abstand voneinander haben.

Bei Arbeitsbetrieb in der Ebene oder nur geringfügig geneigten Flächen kann die genannte Spurüberlappung 9 einen an sich üblichen Ausgangswert einnehmen und beispielsweise 5% bis 20% des Rechkreiseldurchmessers betragen, vgl. Figur 1.

Bei schrägen Hangfahrten, beispielsweise entlang von Höhenlinien oder generell quer zum Hang, sodass der Kreiselschwader 1 insgesamt eine Querneigung erhält, kann die genannte Spurüberlappung 9 verändert werden. Hierzu können die vorderen Rechkreisel 6v und/oder die hinteren Rechkreisel 6h in ihrem Abstand vom Maschinenrahmen 2 verstellt werden. Hierzu können die genannten Tragarme 7 beispielsweise teleskopierbar ausgebildet sein, wobei ein Stellaktor 10 beispielsweise in Form eines Hydraulikzylinders zum Teleskopieren des jeweiligen Tragarms 7 vorgesehen sein kann.

Insbesondere können zumindest die vorderen Rechkreisel 6v in ihrem Abstand vom Maschinenrahmen 2 verstellt werden, um die Spurüberlappung 9 verändern zu können.

Eine Einstellvorrichtung 11 zum Einstellen der Spurüberlappung 9 kann einen Jobrechner mit einem Mikroprozessor und einem Programmspeicher sowie einem Arbeitsspeicher umfassen, wobei der Jobrechner Teil des Kreiselschwaders 1 sein oder auch am Schlepper 5 vorgesehen sein kann. Die Einstellvorrichtung 11 ist dabei dazu ausgebildet, die Spurüberlappung 9 in Abhängigkeit einer Hangneigung bzw. einer Querneigung des Kreiselschwaders 1 und/oder des Schleppers 5 einzustellen und anzupassen.

Die Hangneigung bzw. Querneigung des Kreiselschwaders 1 bzw. des Schleppers 5 wird dabei sensorisch erfasst, wobei ein Neigungssensor 12 am Kreiselschwader 1 vorgesehen ist**,** beispielsweise auf dessen Maschinenrahmen 2 montiert , um eine Querneigung des Kreiselschwaders 1 in einer Ebene senkrecht zur Fahrtrichtung und/oder zur Längsachse des Kreiselschwaders 1 zu erfassen. Als Querneigung kann dabei ein Neigungswinkel einer sich quer zur Fahrtrichtung erstreckenden Linie, die bei Aufstand der Maschine horizontal ausgerichtet ist, gegenüber der Horizontalen gemessen werden. Gleichermaßen ist es aber auch möglich, eine Neigung gegenüber der Vertikalen zu messen.

Zusätzlich kann ein Neigungssensor 12 auch am Schlepper 5 montiert sein, um dessen Querneigung zu erfassen. Alternativ oder zusätzlich kann aber auch beispielsweise eine tatsächliche Hangneigung erfasst werden, wobei hier eine Konturerkennung vor dem Schlepper und deren Abgleich mit einer Horizontalen möglich ist.

In Abhängigkeit der sensorisch erfassten Hang- und/oder Querneigung des Kreiselschwaders 1 bzw. des Schleppers 5 reagiert die Einstellvorrichtung 11 und passt in Abhängigkeit des Neigungssignals des Neigungssensors 12 die Spurüberlappung 9 an.

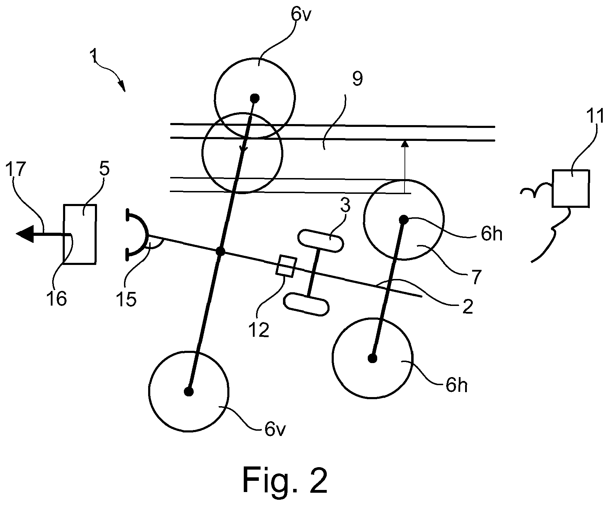

Insbesondere kann die Einstellvorrichtung 11 dazu ausgebildet sein, den vorderen Rechkreisel 6 auf der hangaufwärts orientierten Seite des Kreiselschwaders 1 mit zunehmender Hang- bzw. Querneigung weiter nach innen zu verstellen, sodass die Spurüberlappung 9 zum nachlaufenden hinteren Rechkreisel 6h zunimmt, vgl. Figur 2. Hierdurch kann sichergestellt werden, dass auch bei Abdriften des Kreiselschwaders 1 hangabwärts kein unbearbeiteter Streifen im Übergangsbereich der Arbeitsbereiche bzw. bearbeiteten Fahrbahnbereiche zwischen vorderem und hinterem Rechkreisel entsteht. Vorzugsweise kann die Einstellvorrichtung 11 den vorderen Rechkreisel 6v desto stärker nach innen verstellen, je größer die Hangneigung wird.

Alternativ oder zusätzlich kann die Einstellvorrichtung 11 auch den vorderen Rechkreisel 6v auf der hangabwärts orientierten Seite der Maschine verstellen, also den gemäß Figur 2 vorderen linken Rechkreisel. Die Einstellvorrichtung 11 kann dabei dazu ausgebildet sein, diesen hangabwärtigen, vorderen Rechkreisel 6v mit zunehmender Hangneigung weiter nach außen zu verstellen, beispielsweise durch Verlängern des zugehörigen Tragarms 7, sodass an sich die Spurüberlappung 9 zum zugeordneten, hinteren Rechkreisel 6h abnimmt. Durch das Abdriften des Kreiselschwaders 1 in Folge der Hangneigung wird dies jedoch kompensiert und es reicht auch eine kleinere Spurüberlappung 9 aus, um unbearbeitete Streifen entlang des Fahrwegs zu vermeiden. Durch das weiter nach außen Verstellen des hangabwärtigen vorderen Rechkreisels kann die maximale Arbeitsbreite des Kreiselschwaders 1 auch bei Abdriften aufrechterhalten bzw. Einbußen diesbezüglich minimiert werden. Was auf der hangaufwärtigen Seite durch nach innen Verstellen des vorderen Rechkreisels 6v an Gesamtarbeitsbreite verloren geht, kann an der unteren Seite zugegeben werden. Insbesondere können die Verstellungen der vorderen Rechkreisel 6v auf der linken und rechten Seite betragsmäßig gleich groß gewählt werden, wobei jedoch auch voneinander abweichende Verstellungen der vorderen Rechkreisel 6v möglich sind, beispielsweise um nach einem konservativeren Ansatz eine vollständige Bearbeitung der Fahrwegsbereiche ohne Ausnutzung der maximalen Arbeitsbreite sicherzustellen. Beispielsweise kann es sinnvoll sein, die nach außen Verstellung des unteren, vorderen Rechkreisels kleiner zu wählen als die nach innen Verstellung des oberen vorderen Rechkreisels, da der vordere, untere Rechkreisel das Erntegut sozusagen hangaufwärts rechen muss.

Die Einstellvorrichtung 11 kann grundsätzlich alleine das Neigungssignal des Neigungssensors 12 berücksichtigen.

**In** alternativer Weiterbildung der Erfindung kann die Einstellvorrichtung 11 aber auch noch andere Parameter wie Betriebs- oder Umgebungsgrößen berücksichtigen.

Insbesondere kann die Einstellvorrichtung 11 eine Bodenbeschaffenheits-Eingabeschnittstelle 13 aufweisen, um der Einstellvorrichtung 11 ein Bodenbeschaffenheits-Signal zuzuführen. Dies kann über eine manuelle Eingabeschnittstelle beispielsweise in Form eines Touchscreens erfolgen, sodass ein Maschinenführer die Bodenbeschaffenheit in der eingangs schon beschriebenen Weise bewerten bzw. qualifizieren und dann manuell eingeben kann.

Alternativ oder zusätzlich kann über die genannte Bodenbeschaffenheits-Schnittstelle 13 aber auch ein Sensorsignal eines Bodenbeschaffenheitssensors zugeführt werden, der beispielsweise eine Bodenfeuchte bzw. Oberflächennässe erfassen kann.

Alternativ oder zusätzlich zu einem solchen Bodenbeschaffenheitssensor 14 kann die Einstellvorrichtung 11 auch einen Einlenkwinkel des Maschinenrahmens 2 des Kreiselschwaders 1 gegenüber dem Schlepper 5 berücksichtigen, der durch einen Einlenksensor 15 erfasst werden kann und charakterisiert, wie stark der Kreiselschwader 1 gegenüber dem Schlepper 5 bei Hangfahrten abdriftet bzw. bei Kurvenfahrten einlenkt.

Alternativ oder zusätzlich kann die Einstellvorrichtung 11 auch ein Lenkwinkel-Signal für die Einstellung der Spurüberlappung 9 berücksichtigen, welches den Einlenkwinkel des Schleppers 5 charakterisiert. Dies kann beispielsweise der Lenkeinschlag eines Lenkrads sein und wird üblicherweise über den ISO-Bus des Schleppers 5 bereitgestellt.

## Patentansprüche

1. Kreiselschwader (1) zum Anbau an einen Schlepper, mit mehreren Rechkreiseln (6) zum Zusammenrechen von Erntegut zu einem Schwad, von denen zumindest zwei hintereinander mit einer vorbestimmten Spurüberlappung (9) zueinander angeordnet sind, wobei zumindest einer der genannten zwei Rechkreisel (6v) von einer Einstellvorrichtung (11) zum Einstellen der Spurüberlappung (9) quer verstellbar ist, **dadurch gekennzeichnet, dass** ein Neigungssensor (12) am Kreiselschwader (1) montiert und dazu konfiguriert ist, eine Querneigung des Kreiselschwaders (1) in einer Ebene senkrecht zur Längsachse und/oder zur Fahrtrichtung (17) zu messen und die genannte Einstellvorrichtung (11) dazu ausgebildet ist, in Abhängigkeit eines Sensorsignals des Neigungssensors (12), das die Querneigung des Kreiselschwaders (1) angibt, die Spurüberlappung (9) zu vergrößern und/oder zu verkleinern.

2. Kreiselschwader nach dem vorhergehenden Anspruch, wobei der Neigungssensor (12) auf einem Maschinenrahmen (2) des Kreiselschwaders (1) montiert ist, der durch ein Fahrwerk (3) auf dem Boden abgestützt ist und an dem die Rechkreisel (6) über Greifarme (7) angelenkt sind.

3. Kreiselschwader nach einem der vorhergehenden Ansprüche, wobei die Einstellvorrichtung (11) dazu ausgebildet ist, einen vorderen Rechkreisel (6v) auf einer hangaufwärts orientierten Maschinenseite mit zunehmender, vom Neigungssensor (12) erfasster Querneigung weiter zu einer Maschineninnenseite hin zu verstellen und die Spurüberlappung (9) zu einem hinteren Rechkreisel (6h) auf der hangaufwärts orientierten Maschinenseite zu vergrößern.

4. Kreiselschwader nach einem der vorhergehenden Ansprüche, wobei die Einstellvorrichtung (11) dazu ausgebildet ist, einen vorderen Rechkreisel (6v) auf einer hangabwärts orientierten Maschinenseite mit zunehmender, vom Neigungssensor (12) erfasster Querneigung weiter nach außen zu verstellen und die Spurüberlappung (9) zu einem hinteren Rechkreisel auf der genannten hangabwärts orientierten Maschinenseite zu verkleinern.

5. Kreiselschwader nach einem der vorhergehenden Ansprüche, wobei die Einstellvorrichtung (11) dazu ausgebildet ist, die Spurüberlappung (9) stufenlos und kontinuierlich in Abhängigkeit des Neigungssignals des Neigungssensors (12) zu verstellen.

6. Kreiselschwader nach einem der vorhergehenden Ansprüche, wobei die Einstellvorrichtung (11) dazu ausgebildet ist, zumindest einen Schwellwert zu berücksichtigen und die Spurüberlappung (9) nur dann zu verstellen, wenn die erfasste Querneigung einen vorbestimmten Neigungsschwellwert und/oder eine Veränderung der erfassten Querneigung einen vorbestimmten Veränderungsschwellwert überschreitet.

7. Rechkreisel nach einem der vorhergehenden Ansprüche, wobei die Einstellvorrichtung (11) eine Bodenbeschaffenheits-Schnittstelle (13) zum Eingeben eines Bodenbeschaffenheits-Signals aufweist und dazu ausgebildet ist, die Spurüberlappung in Abhängigkeit des empfangenen Bodenbeschaffenheits-Signals zu verändern, insbesondere eine Zielüberlappung je Querneigungsgrad in Abhängigkeit des Bodenbeschaffenheitssignals zu verändern.

8. Schwadkreisel nach dem vorhergehenden Anspruch, wobei die Bodenbeschaffenheits-Schnittstelle (13) mit einer Eingabeeinrichtung zum manuellen Eingeben einer Bodenbeschaffenheit durch einen Maschinenführer aufweist.

9. Schwadkreisel nach dem vorhergehenden Anspruch, wobei ein Auswahlmenü umfassend eine Auswahl an mehreren, verschiedenen Bodenbeschaffenheiten zum Auswählen durch den Maschinenführer vorgesehen ist.

10. Kreiselschwader nach einem der vorhergehenden Ansprüche, wobei die Einstellvorrichtung (11) dazu ausgebildet ist, die Spurüberlappung (9) in Abhängigkeit eines Einlenkwinkel-Signals eines Einlenkwinkel-Sensors (15), das einen Einlenkwinkel des Kreiselschwaders (1) gegenüber dem Schlepper (5) angibt, zu verändern.

11. Kreiselschwader nach einem der vorhergehenden Ansprüche, wobei die Einstellvorrichtung (11) dazu ausgebildet ist, die Spurüberlappung (9) in Abhängigkeit eines Lenkwinkelsignals, das den Einlenkwinkel des Schleppers (5) charakterisiert, zu verändern.

12. Verfahren zum Betreiben eines Kreiselschwaders, der zumindest zwei hintereinander mit einer vorbestimmten Spurüberlappung (9) zueinander angeordnete Rechkreisel (6v,6h) aufweist, von denen zumindest ein Rechkreisel (6v) von einer Einstellvorrichtung (11) quer verstellbar ist, **dadurch gekennzeichnet, dass** eine Hangneigung und/oder eine Querneigung des Kreiselschwaders von einem Neigungssensor (12) , der am Kreiselschwader (1) montiert ist, in einer Ebene senkrecht zur Längsachse und/oder zur Fahrtrichtung (17) sensorisch erfasst wird und die Spurüberlappung (9) in Abhängigkeit der sensorisch erfassten Hang- und/oder Querneigung vergrößert oder verkleinert wird.

## Claims

1. Rotary rake (1) for attachment to a tractor, with a plurality of rake rotors (6) for raking crop material together into a swath, of which at least two are arranged behind one another relative to one another with a predetermined track overlap (9), wherein at least one of the said two rake rotors (6v) is transversely adjustable by an adjustment device (11) for adjusting the track overlap (9), **characterized in that** an inclination sensor (12) is mounted on the rotary rake (1) and is configured to measure a transverse inclination of the rotary rake (1) in a plane perpendicular to the longitudinal axis and/or to the direction of travel (17), and said adjustment device (11) is configured, as a function of a sensor signal of the inclination sensor (12), which indicates the transverse inclination of the rotary rake (1), to enlarge and/or reduce the track overlap (9).

2. Rotary rake according to the preceding claim, wherein the inclination sensor (12) is mounted on a machine frame (2) of the rotary rake (1), which is supported on the ground by a running gear (3) and to which the rake rotors (6) are articulated via gripping arms (7).

3. Rotary rake according to one of the preceding claims, wherein the adjustment device (11) is configured to adjust a front rake rotor (6v) on a machine side oriented uphill further toward an inner side of the machine as the transverse inclination detected by the inclination sensor (12) increases, and to enlarge the track overlap (9) with a rear rake rotor (6h) on the machine side oriented uphill.

4. Rotary rake according to one of the preceding claims, wherein the adjustment device (11) is configured to adjust a front rake rotor (6v) on a machine side oriented downhill further outward as the transverse inclination detected by the inclination sensor (12) increases, and to reduce the track overlap (9) with a rear rake rotor on the said machine side oriented downhill.

5. Rotary rake according to one of the preceding claims, wherein the adjustment device (11) is configured to adjust the track overlap (9) steplessly and continuously as a function of the inclination signal of the inclination sensor (12).

6. Rotary rake according to one of the preceding claims, wherein the adjustment device (11) is configured to take into account at least one threshold and to adjust the track overlap (9) only when the detected transverse inclination exceeds a predetermined inclination threshold and/or a change in the detected transverse inclination exceeds a predetermined change threshold.

7. Rake rotor according to one of the preceding claims, wherein the adjustment device (11) has a soil-condition interface (13) for inputting a soil-condition signal and is configured to change the track overlap as a function of the received soil-condition signal, in particular to change a target overlap per degree of transverse inclination as a function of the soil-condition signal.

8. Swath rotor according to the preceding claim, wherein the soil-condition interface (13) comprises an input device for manually inputting a soil condition by a machine operator.

9. Swath rotor according to the preceding claim, wherein a selection menu comprising a selection of a plurality of different soil conditions for selection by the machine operator is provided.

10. Rotary rake according to one of the preceding claims, wherein the adjustment device (11) is configured to change the track overlap (9) as a function of an articulation-angle signal of an articulation-angle sensor (15), which indicates an articulation angle of the rotary rake (1) relative to the tractor (5).

11. Rotary rake according to one of the preceding claims, wherein the adjustment device (11) is configured to change the track overlap (9) as a function of a steering-angle signal which characterizes the steering angle of the tractor (5).

12. Method for operating a rotary rake, which comprises at least two rake rotors (6v, 6h) arranged one behind the other relative to one another with a predetermined track overlap (9), of which at least one rake rotor (6v) is transversely adjustable by an adjustment device (11), **characterized in that** a slope inclination and/or a transverse inclination of the rotary rake is detected by sensors by an inclination sensor (12), which is mounted on the rotary rake (1), in a plane perpendicular to the longitudinal axis and/or to the direction of travel (17), and the track overlap (9) is enlarged or reduced as a function of the slope and/or transverse inclination detected by sensors.

## Revendications

1. Andaineur rotatif (1) destiné à être attelé à un tracteur, comprenant plusieurs rotors de ratelage (6) destinés à rassembler du produit récolté en un andain, parmi lesquels au moins deux sont disposés l'un derrière l'autre avec un recouvrement de voie (9) prédéterminé l'un par rapport à l'autre, au moins l'un desdits deux rotors de ratelage (6v) étant réglable transversalement par un dispositif de réglage (11) pour régler le recouvrement de voie (9), **caractérisé en ce qu'**un capteur d'inclinaison (12) est monté sur l'andaineur rotatif (1) et est configuré pour mesurer une inclinaison transversale de l'andaineur rotatif (1) dans un plan perpendiculaire à l'axe longitudinal et/ou à la direction d'avancement (17), et ledit dispositif de réglage (11) est conçu pour augmenter et/ou réduire le recouvrement de voie (9) en fonction d'un signal de capteur du capteur d'inclinaison (12), qui indique l'inclinaison transversale de l'andaineur rotatif (1).

2. Andaineur rotatif selon la revendication précédente, dans lequel le capteur d'inclinaison (12) est monté sur un châssis de machine (2) de l'andaineur rotatif (1), qui est supporté sur le sol par un train roulant (3) et auquel les rotors de ratelage (6) sont articulés par des bras de préhension (7).

3. Andaineur rotatif selon l'une des revendications précédentes, dans lequel le dispositif de réglage (11) est conçu pour régler un rotor de ratelage avant (6v), sur un côté de machine orienté vers l'amont de la pente, avec une inclinaison transversale croissante détectée par le capteur d'inclinaison (12), davantage vers un côté intérieur de la machine et pour augmenter le recouvrement de voie (9) par rapport à un rotor de ratelage arrière (6h) sur le côté de machine orienté vers l'amont de la pente.

4. Andaineur rotatif selon l'une des revendications précédentes, dans lequel le dispositif de réglage (11) est conçu pour régler un rotor de ratelage avant (6v), sur un côté de machine orienté vers l'aval de la pente, avec une inclinaison transversale croissante détectée par le capteur d'inclinaison (12), davantage vers l'extérieur et pour réduire le recouvrement de voie (9) par rapport à un rotor de ratelage arrière sur ledit côté de machine orienté vers l'aval de la pente.

5. Andaineur rotatif selon l'une des revendications précédentes, dans lequel le dispositif de réglage (11) est conçu pour régler le recouvrement de voie (9) de manière continue et sans paliers en fonction du signal d'inclinaison du capteur d'inclinaison (12).

6. Andaineur rotatif selon l'une des revendications précédentes, dans lequel le dispositif de réglage (11) est conçu pour prendre en compte au moins une valeur seuil et pour ne régler le recouvrement de voie (9) que lorsque l'inclinaison transversale détectée dépasse une valeur seuil d'inclinaison prédéterminée et/ou lorsqu'une variation de l'inclinaison transversale détectée dépasse une valeur seuil de variation prédéterminée.

7. Rotor de ratelage selon l'une des revendications précédentes, dans lequel le dispositif de réglage (11) comporte une interface de nature du sol (13) destinée à l'entrée d'un signal de nature du sol et est conçu pour modifier le recouvrement de voie en fonction du signal de nature du sol reçu, en particulier pour modifier un recouvrement cible par degré d'inclinaison transversale en fonction du signal de nature du sol.

8. Rotor d'andainage selon la revendication précédente, dans lequel l'interface de nature du sol (13) comporte un dispositif d'entrée destiné à l'entrée manuelle d'une nature du sol par un conducteur de machine.

9. Rotor d'andainage selon la revendication précédente, dans lequel un menu de sélection comprenant une sélection de plusieurs natures du sol différentes, destiné à la sélection par le conducteur de machine, est prévu.

10. Andaineur rotatif selon l'une des revendications précédentes, dans lequel le dispositif de réglage (11) est conçu pour modifier le recouvrement de voie (9) en fonction d'un signal d'angle de braquage d'un capteur d'angle de braquage (15), qui indique un angle de braquage de l'andaineur rotatif (1) par rapport au tracteur (5).

11. Andaineur rotatif selon l'une des revendications précédentes, dans lequel le dispositif de réglage (11) est conçu pour modifier le recouvrement de voie (9) en fonction d'un signal d'angle de direction, qui caractérise l'angle de braquage du tracteur (5).

12. Procédé de fonctionnement d'un andaineur rotatif, qui présente au moins deux rotors de ratelage (6v, 6h) disposés l'un derrière l'autre avec un recouvrement de voie (9) prédéterminé l'un par rapport à l'autre, parmi lesquels au moins un rotor de ratelage (6v) est réglable transversalement par un dispositif de réglage (11), **caractérisé en ce qu'**une inclinaison de pente et/ou une inclinaison transversale de l'andaineur rotatif est détectée sensoriellement, par un capteur d'inclinaison (12) monté sur l'andaineur rotatif (1), dans un plan perpendiculaire à l'axe longitudinal et/ou à la direction d'avancement (17), et le recouvrement de voie (9) est augmenté ou réduit en fonction de l'inclinaison de pente et/ou de l'inclinaison transversale détectée sensoriellement.
